# EUROPEAN PATENT APPLICATION

(11) **EP 2 424 306 A1**
(43) Date of publication of application: **29.02.2012**
(21) Application number: 10766899.8
(22) Date of filing: 25.02.2010
(51) Int. Cl.: H04W 48/18, H04W 48/06

(54) **WIRELESS COMMUNICATION SYSTEM, BASE STATION APPARATUS, WIRELESS COMMUNICATION TERMINAL, AND WIRELESS COMMUNICATION METHOD**

(30) Priority: 23.04.2009 JP 2009105630
(71) Applicant: NEC Corporation, Tokyo 108-8001 (JP)
(72) Inventor: NAKATA, Atsushi, Tokyo 108-8001 (JP); HAYASHI, Sadafuku, Tokyo 108-8001 (JP)
(74) Representative: MacDougall, Alan John Shaw
(86) International application number: PCT/JP2010/052916
(87) International publication number: WO 2010/122839

(57) **Abstract**

A wireless communication system according to the present invention includes a wireless communication terminal and a base station apparatus. The base station apparatus transmits to the wireless communication terminal, cell information relating to a cell of the base station apparatus, and selectability information indicating whether the cell information is manually selectable. The wireless communication terminal receives from the base station apparatus the cell information and the selectability information of the base station apparatus.

## Description

### Technical Field

The present invention relates to a wireless communication system, a base station apparatus, a wireless communication terminal and a wireless communication method.

### Background Art

Some recent wireless communication systems include, as a base station apparatus, a small wireless base station which is called a femto base station (Home NB or Home eNB: hereinafter referred to an H(e)NB when indicating both of them).

The femtocell that is an area where wireless communication is possible, which is built by an H(e)NB, is assigned a CSG ID (3GPP TS25.331) of a Closed Subscriber Group (hereinafter referred to as CSG). And only UE (User Equipment) that is a wireless communication terminal used by a user who subscribes to the CSG can connect to the femtocell (3GPP TS25.304).

Further, the UE used by the user subscribing to the CSG holds therein an Allowed CSG List that is a list of CSG IDs that are assigned to connectable femtocells to manage connectable femtocells (3GPP TS25.304).

Meanwhile, a user who does not subscribe to the CSG can also select a femtocell assigned a CSG ID that is not present in the Allowed CSG List by Manual CSG ID Selection (3GPP TS25.304) and make a connection request from his/her UE.

In this case, even though services that can be used at the beginning of the connection are limited, the UE that made a connection request can add to the Allowed CSG List the CSG ID that is manually selected when a connection is successfully established by the communication with a Core Network Node (3GPP TS25.304).

Incidentally, when an H(e)NB is set up in a heavily populated area such as a shopping center and a live performance club, the CSG ID assigned to the femtocell built by the H(e)NB is included in the Allowed CSG List such that the UE used by the owner having the H(e)NB and the concerned parties thereof are allowed to connect to the femtocell.

However, in this case, even though the CSG ID of the femtocell is not included in the Allowed CSG List, the UE of the general user other than the owner of the H(e)NB and the concerned parties thereof is also sometimes allowed to make a connection request to the femtocell by Manual CSG ID Selection.

It is, therefore, expected that a considerable number of UEs of general user repeatedly make a connection request to the femtocell; at that time, a problem in which signaling congestion occurs at the H(e)NB, which prevents the UE from being used by the owner of the H(e)NB and the concerned parties thereof from making a connection request, is expected to arise.

In particular, it is considered that, when the H(e)NB operates in a Hybrid Access Mode, the above problem is more likely to occur. The Hybrid Access Mode means a mode that includes, as UEs that are connectable to a femtocell built by an H(e)NB, not only UEs that are CSG members subscribing to the CSG but also UEs that are non-CSG members (TS22.220 Ver9.0.0).

In order to solve the above problem, building a framework in which a connection request to a femtocell from UE of a CSG member is allowed and in which a connection request to the femtocell from UE of a non-CSG member is restricted can be conceived.

For example, the disclosure document 3GPP: RP-090307 proposes a parameter (Cell Reserved for CSG) allowing a connection request from only UEs which have the CSG ID of the femtocell included in the Allowed CSG List. Using this parameter, the following may be achieved:
(1) Prohibit connection requests to a femtocell from all UEs (existing).
(2) Allow connection requests to the femtocell only from UEs which have the CSG ID of the femtocell included in the Allowed CSG List, and prohibit connection requests from other UEs (new).

### Citation List

### Non Patent Literature

Non Patent Literature 1: 3GPP TS25.304 Ver8.5.0
Non Patent Literature 2: 3GPP: RP-090307

### Summary of the Invention

### Problem to be solved by the Invention

Incidentally, in the configuration in which the above parameter: CSG Reserved for CSG is used, connection requests to a femtocell from all UEs other than UEs which have the CSG ID of the femtocell included in the Allowed CSG List, that is to say, not only UEs having no CSG ID of the femtocell included in the Allowed CSG List, but also UEs not supporting the CSG are not allowed.

Therefore, when utilizing a femtocell, a user who uses an old UE not supporting the CSG has to forcibly buy a new one that supports the CSG.

Accordingly, in order to allow a connection request to a femtocell from UE not supporting a CSG while preventing signaling congestion from occurring at an H(e)NB, it is considered that a framework that prohibits the UE from manually selecting the CSG ID of the femtocell built by the H(e)NB is needed.

However, in the present configuration, there is a problem in which since UE cannot know whether the CSG ID of the femtocell is manually selectable, it is impossible to prohibit the UE from manually selecting the CSG ID.

Thus, it is an object of the present invention to provide a wireless communication system, a base station apparatus, a wireless communication terminal and a communication method by which UE can know whether the CSG ID of a femtocell is manually selectable.

### Means that solve the problem

A wireless communication system according to the present invention includes
a wireless communication terminal and a base station apparatus, wherein
the base station apparatus
transmits to the wireless communication terminal, cell information relating to a cell of the base station apparatus, and selectability information indicating whether the cell information is manually selectable, and
the wireless communication terminal
receives from the base station apparatus the cell information and the selectability information of the base station apparatus.

The base station apparatus of the present invention
which performs wireless communication with the wireless communication terminal, includes
a transmitter that transmits to the wireless communication terminal, cell information relating to a cell of the base station apparatus, and selectability information indicating whether the cell information is manually selectable.

The wireless communication terminal of the present invention
which performs wireless communication with a base station apparatus, includes
a receiver that receives from the base station apparatus, cell information relating to a cell of the base station apparatus, and selectability information indicating whether the cell information is manually selectable.

A first wireless communication method of the present invention
which is performed by a wireless communication system including a wireless communication terminal and a base station apparatus, includes the steps of:
the base station apparatus transmitting to the wireless communication terminal, cell information relating to a cell of the base station apparatus, and selectability information indicating whether the cell information is manually selectable, and
the wireless communication terminal receiving from the base station apparatus the cell information and the selectability information of the base station apparatus.

A second wireless communication method of the present invention
which is performed by a base station apparatus that performs wireless communication with the wireless communication terminal, includes the step of:
transmitting to the wireless communication terminal, cell information relating to a cell of the base station apparatus, and selectability information indicating whether the cell information is manually selectable.

A third wireless communication method of the present invention
which is performed by a wireless communication terminal that performs wireless communication with the base station apparatus, includes the step of:
receiving from the base station apparatus, cell information relating to a cell of the base station apparatus, and selectability information indicating whether the cell information is manually selectable.

### Advantageous Effect of Invention

As described above, in the present invention, a base station apparatus transmits to a wireless communication terminal, cell information relating to a cell of the base station apparatus, and selectability information indicating whether the cell information is manually selectable.

Therefore, an effect is obtained in which the wireless communication terminal can know whether cell information of the base station apparatus is manually selectable in the wireless communication terminal.

### Brief Description of Drawings

Figure 1 is a block diagram showing a configuration of a wireless communication system according to a first exemplary embodiment of the present invention.
Figure 2 is a sequence diagram illustrating the operation of the wireless communication system according to the first exemplary embodiment of the present invention.
Figure 3 is a diagram showing a network configuration of a wireless communication system according to a second exemplary embodiment of the present invention.
Figure 4 is a diagram showing a parameter: Cell Prohibited for Manual CSG ID Selection that is set for System Information by an H(e)NB according to the second exemplary embodiment of the present invention.
Figure 5 is a block diagram showing a configuration of the H(e)NB according to the second exemplary embodiment of the present invention.
Figure 6 is a block diagram showing a configuration of UE according to the second exemplary embodiment of the present invention.
Figure 7 is a sequence diagram illustrating the operation of the wireless communication system according to the second exemplary embodiment of the present invention.
Figure 8 is a flowchart illustrating the operation of the H(e)NB according to the second exemplary embodiment of the present invention.
Figure 9 is a flowchart illustrating the operation of the UE according to the second exemplary embodiment of the present invention.
Figure 10 is a diagram showing a display screen of candidates for manual CSG ID Selection that is displayed on the UE according to the second exemplary embodiment of the present invention.
Figure 11 is a sequence diagram illustrating the operation of a wireless communication system according to a third exemplary embodiment of the present invention.
Figure 12A is a flowchart illustrating the operation of UE according to the third exemplary embodiment of the present invention.
Figure 12B is a flowchart illustrating the procedure for extracting a candidate for manual CSG ID Selection by the UE according to the third exemplary embodiment of the present invention.
Figure 13 is a diagram showing a parameter: Access Class Barred for Manual CSG ID Selection that is set for System Information by an H(e)NB according to a fourth exemplary embodiment of the present invention.
Figure 14 is a diagram showing a network configuration of a wireless communication system according to a fifth exemplary embodiment of the present invention.

### Description of Embodiments

Exemplary embodiments of the present invention will now be described with reference to the drawings.

### (First Exemplary Embodiment)

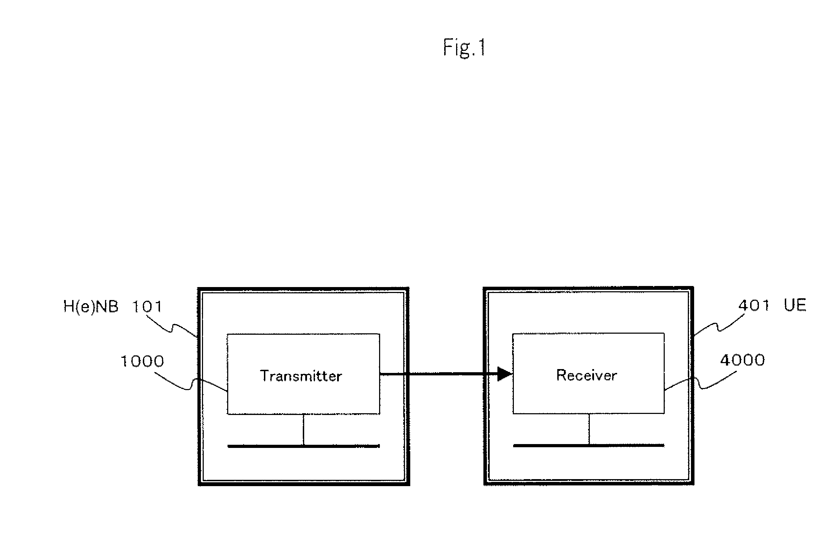

Referring to Figure 1, a wireless communication system of the present exemplary embodiment includes H(e)NB 101 that is a base station apparatus and UE 401 that is a wireless communication terminal. Note that for the sake of simplification, although only one H(e)NB and one UE are shown in Figure 1, the number of H(e)NBs and UEs are not limited thereto.

H(e)NB 101 includes a transmitter 1000 that transmits to UE 401, cell information relating to a femtocell built by H(e)NB 101 and selectability information indicating whether the cell information is manually selectable by UE 401.

Note that cell information is information for identifying a cell or indicating a cell attribute, such as a CSG ID.

In addition, UE 401 includes receiver 4000 that receives from H(e)NB 101, the cell information of H(e)NB 101 and selectability information.

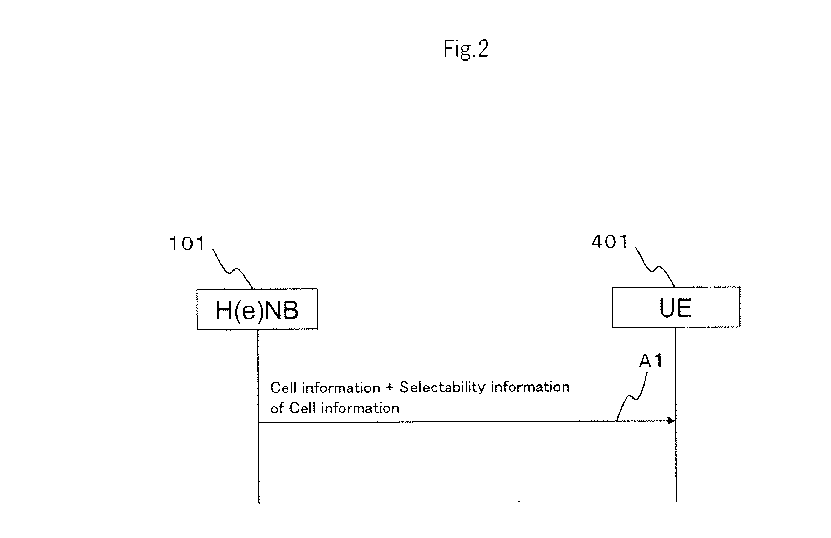

The operation of the wireless communication system according to the present exemplary embodiment will now be described with reference to a sequence diagram shown in Figure 2.

In step A1, transmitter 1000 of H(e)NB 101 transmits to UE 401 the cell information of H(e)NB 101 and the selectability information of the cell information. However, the cell information and selectability information do not necessarily have to be transmitted at the same time; they may be transmitted separately. The cell information and selectability information are received at receiver 4000 of UE 401.

Therefore, the present exemplary embodiment produces an effect in which UE 401 can know whether the cell information of H(e)NB 101 is manually selectable by UE 401.

### (Second Exemplary Embodiment)

The present exemplary embodiment is a concrete example of the configuration and operation of the first exemplary embodiment.

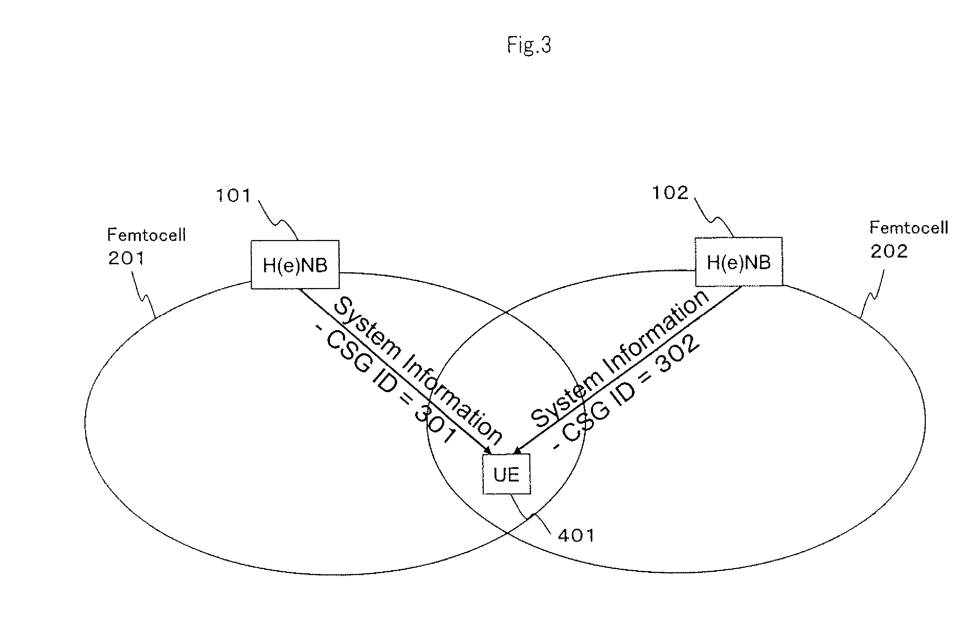

Figure 3 shows a network configuration of a wireless communication system according to the present exemplary embodiment.

Referring to Figure 3, a wireless communication system of the present exemplary embodiment includes H(e)NBs 101 and 102 that are base station apparatuses and UE 401 that is a wireless communication terminal. Note that for the sake of simplification, although two H(e)NBs and one UE are shown in Figure 3, the number of H(e)NBs and UEs are not limited thereto. Further, although the UE is present in the range of two femtocells, UE may be present in the range of one femtocell or three or more femtocells.

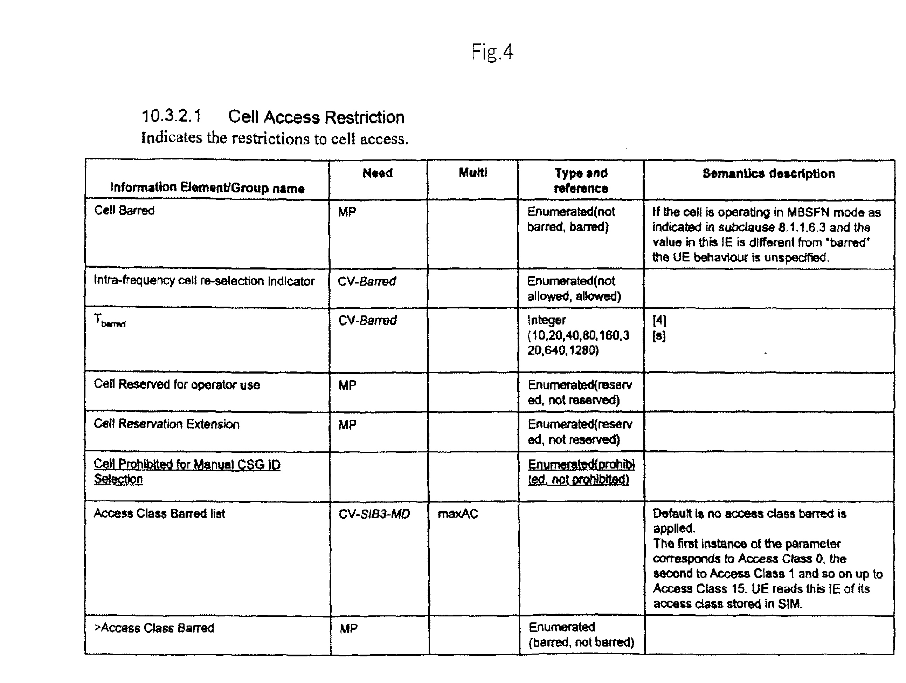

H(e)NB 101 builds femtocell 201 that has been assigned CSG ID 301 that is cell information, and informs femtocell 201 of System Information for which CSG ID 301 is set. At that time, H(e)NB 101 also sets for System Information a parameter that is selectability information indicating whether CSG ID 301 is manually selectable. In this specification, this parameter is set for System Information as Cell Prohibited for Manual CSG ID Selection as shown in Figure 4.

H(e)NB 102 builds femtocell 202 that has been assigned CSG ID 302 that is cell information, and informs femtocell 202 of System Information for which CSG ID 302 is set. At that time, H(e)NB 102 also sets for System Information a parameter: Cell Prohibited for Manual CSG ID Selection that is selectability information indicating whether CSG ID 302 is manually selectable.

UE 401 is present in the range of both femtocells 201 and 202, can acquire System Information that has been informed to each of femtocells 201 and 202, and recognizes the parameter: Cell Prohibited for Manual CSG ID Selection indicating whether each of CSG IDs 301 and 302 is manually selectable.

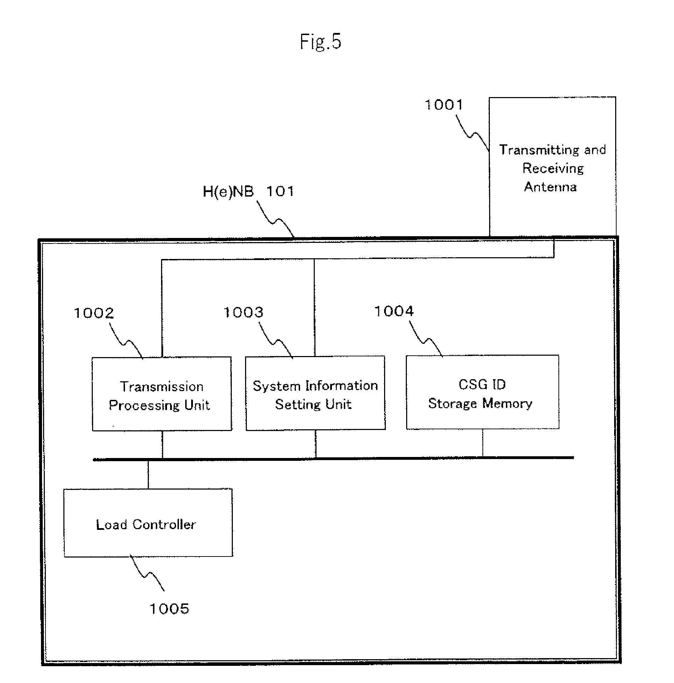

Figure 5 shows a detailed configuration of H(e)NB 101. Note that H(e)NB 102 has the same configuration as that of H(e)NB 101.

Referring to Figure 5, H(e)NB 101 includes transmitting and receiving antenna 1001, transmission processing unit 1002, System Information setting unit 1003, CSG ID storage memory 1004 and load controller 1005.

Note that in Figure 5, transmitter 1000 shown in Figure 1 includes transmitting and receiving antenna 1001 and transmission processing unit 1002. In addition, a controller includes System Information setting unit 1003, CSG ID storage memory 1004 and load controller 1005.

CSG ID 301 assigned to femtocell 201 built by H(e)NB 101 is registered in CSG ID storage memory 1004.

Load controller 1005 knows the rate of signaling processing completion, the rate of transmission power utilization, the rate of network resource utilization and the like in femtocell 201 built by H(e)NB 101, and based on these, assesses the load state of H(e)NB 101.

Then, based on the load state of H(e)NB 101, load controller 1005 determines whether UE that is present in the range of femtocell 201 can manually select CSG ID 301 that is registered in CSG ID storage memory 1004, and if the load state is low, sets the parameter: Cell Prohibited for Manual CSG ID Selection to "permitted (Not Prohibited, Not Barred, Reserved) ", which means manually selectable, on the other hand, if the load state is high, to "restricted (Prohibited, Barred, Not Reserved)", which means manually non-selectable.

System Information setting unit 1003 sets for System Information the parameter: Cell Prohibited for Manual CSG ID Selection that is acquired from load controller 1005, and CSG ID 301 that is acquired from CSG ID storage memory 1004.

Transmission processing unit 1002 broadcasts System Information that is acquired from System Information setting unit 1003 to femtocell 201 through transmitting and receiving antenna 1001.

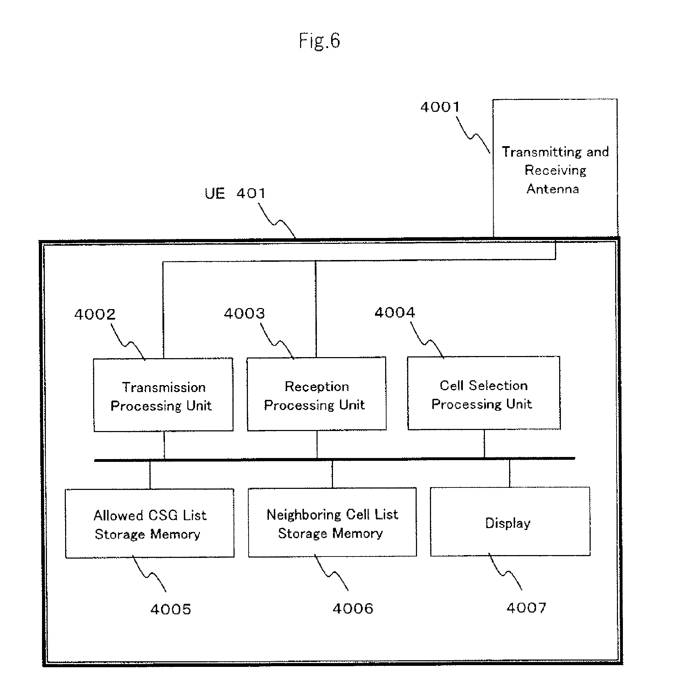

Figure 6 shows the detailed configuration of UE 401.

Referring to Figure 6, UE 401 includes transmitting and receiving antenna 4001, transmission processing unit 4002, reception processing unit 4003, cell selection processing unit 4004, Allowed CSG List storage memory 4005, neighboring cell list storage memory 4006 and display 4007.

Note that in Figure 6, receiver 4000 shown in Figure 1 includes transmitting and receiving antenna 4001 and reception processing unit 4003. In addition, a controller includes cell selection processing unit 4004, Allowed CSG List storage memory 4005 and neighboring cell list storage memory 4006.

Reception processing unit 4003 receives System Information that has been informed to femtocell 201 and femtocell 202 through transmitting and receiving antenna 4001, and registers System Information in neighboring cell list storage memory 4006.

Cell selection processing unit 4004 compares the CSG ID of a neighboring cell included in neighboring cell list storage memory 4006 with CSG IDs included in Allowed CSG List storage memory 4005, and sets as a candidate for manual CSG ID Selection, the CSG ID that is a neighboring cell CSG ID and is included in Allowed CSG List storage memory 4005.

In addition, cell selection processing unit 4004 recognizes the value of the parameter: Cell Prohibited for Manual CSG ID Selection, which is a parameter of the CSG ID for each neighboring cell included in neighboring cell list storage memory 4006, and also sets as a candidate for manual CSG ID Selection, a CSG ID that is a neighboring cell CSG ID and for which the value of the parameter: Cell Prohibited for Manual CSG ID Selection is "permitted".

Cell selection processing unit 4004 displays on display 4007 the list of candidates for manual CSG ID Selection so that a user using UE 401 can manually select at least one CSG ID from among CSG IDs displayed on display 4007 as candidates for manual selection.

In addition, cell selection processing unit 4004 determines, as the destination of the connection request, the femtocell that has been assigned the CSG ID that is manually selected by the user.

Transmission processing unit 4002 generates a connection request message, and transmits the connection request message through transmitting and receiving antenna 4001 to the H(e)NB building the femtocell that has been assigned the CSG ID that is manually selected by the user.

Although the configuration of the present exemplary embodiment has been described in detail, the configuration of the wireless communication system shown in Figure 3, the configuration of the H(e)NB shown in Figure 5 and the configuration of the UE shown in Figure 6 are all well known by those skilled in the art engaged in wireless communication systems complying with 3GPP except for the portion relating to the parameter: Cell Prohibited for Manual CSG ID Selection, and are not related to the present invention directly; therefore, description of the detailed configuration will be omitted.

The operation of the wireless communication system according to the present exemplary embodiment will now be described.

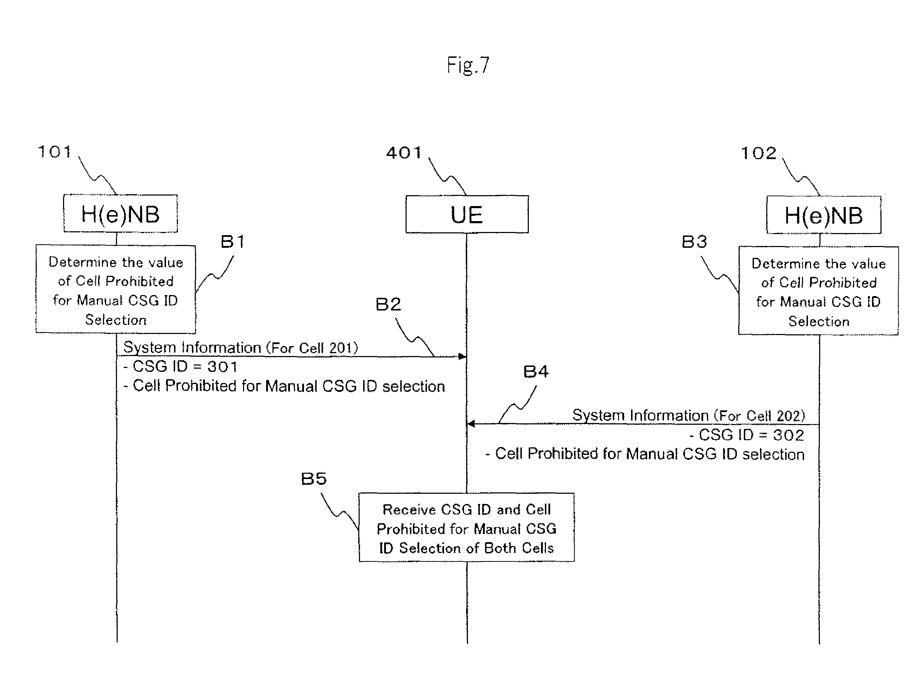

First, the entire operation of the wireless communication system of the present exemplary embodiment will be described with reference to the sequence diagram shown in Figure 7.

Referring to Figure 7, in step B1, H(e)NB 101 determines the value of the parameter: Cell Prohibited for Manual CSG ID Selection, and then, in step B2, informs femtocell 201 of System Information for which CSG ID 301 and the parameter: Cell Prohibited for Manual CSG ID Selection have been set.

Meanwhile, in step B3, H(e)NB 102 determines the value of the parameter: Cell Prohibited for Manual CSG ID Selection, and then, in step B4, informs femtocell 202 of System Information for which CSG ID 302 and the parameter: Cell Prohibited for Manual CSG ID Selection have been set.

In step B5, UE 401 receives from femtocell 201, CSG ID 301 and the parameter: Cell Prohibited for Manual CSG ID Selection, and receives from femtocell 202, CSG ID 302 and the parameter: Cell Prohibited for Manual CSG ID Selection.

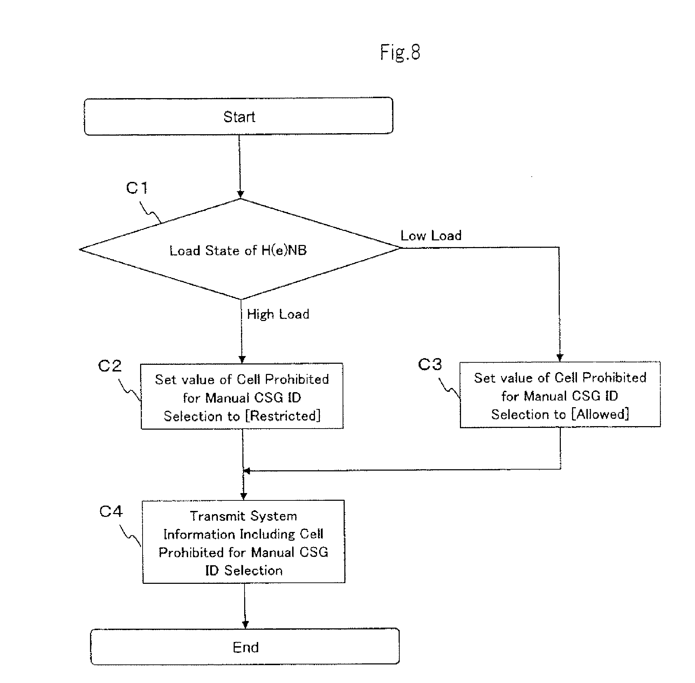

Next, the operation of H(e)NBs 101 and 102 will be described. Here, the operation of H(e)NB 101 will be described with reference to the flowchart shown in Figure 8.

Referring to Figure 8, first, in step C1, load controller 1005 assesses the load state of H(e)NB 101 based on the rate of signaling processing completion, the rate of transmission power utilization, the rate of network resource utilization and the like in femtocell 201 built by H(e)NB 101.

If H(e)NB 101 is in a high load state, in step C2, load controller 1005 sets the value of the parameter: Cell Prohibited for Manual CSG ID Selection to [restricted]; on the other hand, if H(e)NB 101 is in a low load state, in step C3, load controller 1005 sets the value of the parameter: Cell Prohibited for Manual CSG ID Selection to [allowed].

Note that as the method of assessing a high load state or a low load state, for example, a method may be considered in which a high load is assessed when a predetermined threshold is exceeded in a predetermined number of items or more from among the items including the rate of signaling processing completion, the rate of transmission power utilization, the rate of network resource utilization and the like, and otherwise a low load is assessed, without being limited to this.

Thereafter, in step C4, System Information setting unit 1003 sets the parameter: Cell Prohibited for Manual CSG ID Selection for System Information, and transmission processing unit 1002 informs femtocell 201 of the System Information.

Note that in the present exemplary embodiment, although the assessment of the load state of H(e)NB 101 is performed by H(e)NB 101 itself, it may be performed at the higher node not shown (Core Network Node and H(e)NB GW).

In this case, the higher node may notify the assessment result of the load state of H(e)NB 101, and H(e)NB 101 may set the value of the parameter based on the notified assessment result. Alternatively, the higher node may make a setting request of the value of the parameter based on the assessment result of the load state of H(e)NB 101, and H(e)NB 101 may set the value of the parameter based on the notified setting request. Note that the higher node notifies H(e)NB 101 of a message including an assessment result indicating that H(e)NB 101 is in a high load state and a modification request indicating that the value of the parameter is to be set to [restricted] since H(e)NB 101 is in a high load state. In addition, H(e)NB 101 may receive the message that is transmitted by the higher node itself when it is in a high load state, so as to set the value of the parameter to [restricted]. The message includes RANAP: Overload message, for example.

In addition, in the present exemplary embodiment, although load states such as the rate of signaling processing completion, the rate of transmission power utilization, the rate of network resource utilization and the like are used as an indices indicating the communication situation of H(e)NB 101, for example, in the femtocell 201 of H(e)NB 101, the number of UEs within range, the number of UEs in communication, the number of voice calls in communication, the number of packet calls in communication, the number of HSDPA users, the number of HSUPA users, the number of MBMS users, the number of channelization codes used, the number of active wireless access bearers, the rate of H(e)NB 101 CPU usage, the rate of H(e)NB 101 memory usage, the rate of communication completion, the rate of call loss, the rate of connection success/failure, the frequency of handover, the rate of handover success/failure, the amount of uplink interference, the amount of downlink interference, the amount of uplink buffer, the amount of downlink buffer and the like may be used.

In addition, although the present exemplary embodiment determines the value of the parameter depending on the communication situation of H(e)NB 101, the value of the parameter may be determined depending on the current time period. It can be considered that, for example, in the middle of the night and in the time period during which the owner of H(e)NB 101 and the concerned parties thereof are in conference, the parameter is set to [allowed].

Alternatively, the value of the parameter may be determined depending on the indication entered into H(e)NB 101 by an operator. In addition, the indication may be entered into H(e)NB 101 by remote control operation from a specific UE such as the UE of the owner of H(e)NB 101 and the concerned parties thereof.

In addition, in the present exemplary embodiment, [allowed] may be the same thing that as not setting the parameter described above in System Information.

In addition, in the present exemplary embodiment, while the parameter: Cell Prohibited for Manual CSG ID Selection is a separate, individual parameter, it may be a value which is the part of the existing parameters.

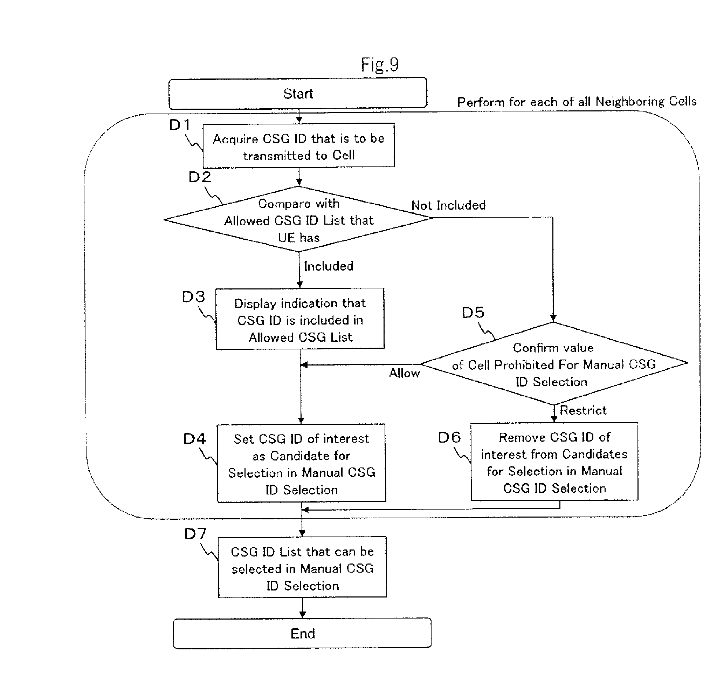

Next, the operation of UE 401 will be described with reference to the flowchart shown in Figure 9.

Referring to Figure 9, first, in step D1, reception processing unit 4003 receives System Information of the neighboring cell to acquire the CSG ID of the neighboring cell.

Next, in step D2, cell selection processing unit 4004 compares the CSG ID of the neighboring cell with CSG IDs included in Allowed CSG List storage memory 4005.

If the CSG ID of the neighboring cell is included in the Allowed CSG List, in step D3, cell selection processing unit 4004 displays on display 4007, an indication that the CSG ID of the neighboring cell is included in the Allowed CSG List, and in step D4, sets the CSG ID of the neighboring cell as a candidate for manual selection.

Meanwhile, if the CSG ID of the neighboring cell is not included in the Allowed CSG List, in step D5, cell selection processing unit 4004 recognizes the value of the parameter: Cell Prohibited for Manual CSG ID Selection that is set for System Information that has been informed to the neighboring cell. If [allowed] is set or no parameter is set, in step D4, cell selection processing unit 4004 keeps the CSG ID of the neighboring cell as a candidate for manual selection, and if [restricted] is set, in step D6, cell selection processing unit 4004 removes the CSG ID of the neighboring cell from the candidates for manual selection.

Thereafter, in step D7, cell selection processing unit 4004 displays on display 4007 the list of candidates for manual CSG ID Selection. Note that the CSG ID that has been removed from the candidates for manual selection may not be displayed, or may be displayed as a non-selectable CSG ID.

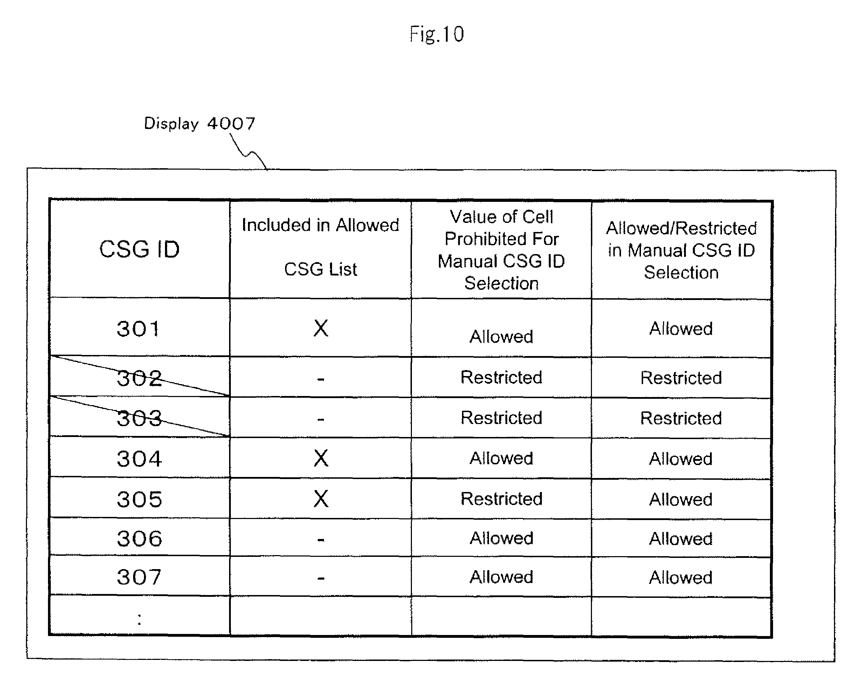

An example of the display screen at display 4007 in this time is shown in Figure 10.

Namely, the CSG ID that satisfies either (A) or (B) is set as a candidate for manual selection, and the user who uses UE 401 can manually select at least one CSG ID from among candidates for manual CSG ID Selection.
(A) CSG ID that is included in Allowed CSG List
(B) CSG ID for which the value of the parameter: Cell Prohibited for Manual CSG ID Selection of System Information is set to [allowed]
In other words, the user who uses UE 401 cannot manually select the CSG ID that is not included in the Allowed CSG List, and for which the value of the parameter: Cell Prohibited for Manual CSG ID Selection of System Information of the femtocell assigned the CSG ID is set to [restricted].

In the example in Figure 10, since CSG IDs [301, 304, 305] are included in the Allowed CSG List of UE 401, they are set as candidates for manual CSG ID Selection.

In particular, CSG ID [305] becomes a candidate for manual CSG ID Selection since it is included in the Allowed CSG List of UE 401 even through the value of the parameter: Cell Prohibited for Manual CSG ID Selection of System Information of the femtocell is [restricted]. This is due to the fact, for example, that the owner of the H(e)NB that builds the femtocell of CSG ID [305] or the concerned parties thereof have CSG ID [305] included in the Allowed CSG List of UEs, and are requested to allow a connection request to the femto cell of CSG ID [305] from UE, even if the femtocell of CSG ID [305] is in a crowded situation.

In addition, although CSG IDs [306, 307] are not included in the Allowed CSG List, they are set as candidates for manual CSG ID Selection since the value of the parameter: Cell Prohibited for Manual CSG ID Selection of System Information of the femtocell is set to [allowed].

In addition, since CSG IDs [302, 303] are not included in the Allowed CSG List, and the value of the parameter: Cell Prohibited for Manual CSG ID Selection of System Information of the femtocell is set to [restricted], they are removed from candidates for manual CSG ID Selection.

As described above, in the exemplary embodiment, the value of the parameter: Cell Prohibited for Manual CSG ID Selection that indicates whether each of H(e)NBs 101 and 102 can manually select CSG IDs 301 and 302 that has been assigned to femtocells 201 and 202 is set in System Information that is informed to femtocells 201 and 202.

Therefore, an effect can be obtained in which UE 401 can know whether CSG IDs 301 and 302 can be manually selected by the user.

In addition, in the present exemplary embodiment, UE 401 removes a CSG ID that is not included in the Allowed CSG List and for which the parameter: Cell Prohibited for Manual CSG ID Selection is set to [restricted] from candidates for manual CSG ID Selection.

Therefore, making a connection request to the femtocell by the UE of general user other than the owner of the H(e)NB and the concerned parties thereof can be reduced, thus an effect can be obtained in which the occurrence of signaling congestion at the H(e)NB can be reduced.

In addition, in the present exemplary embodiment, since a specific CSG ID is simply removed from the candidates for manual selection, an effect can be obtained in which not only a connection request to the femtocell by the UE in which CSG ID is included in the Allowed CSG List can be allowed, but also a connection request to the femtocell by an old UE not supporting CSG and by UE in which CSG ID is not included in the Allowed CSG List can also be allowed.

### (Third Exemplary Embodiment)

Compared to the second exemplary embodiment of Figure 3, the present exemplary embodiment has the same network configuration of the wireless communication system, but the same CSG ID 301 is assigned to both femtocells 201 and 202, thus the operation thereof is different from that of the second exemplary embodiment.

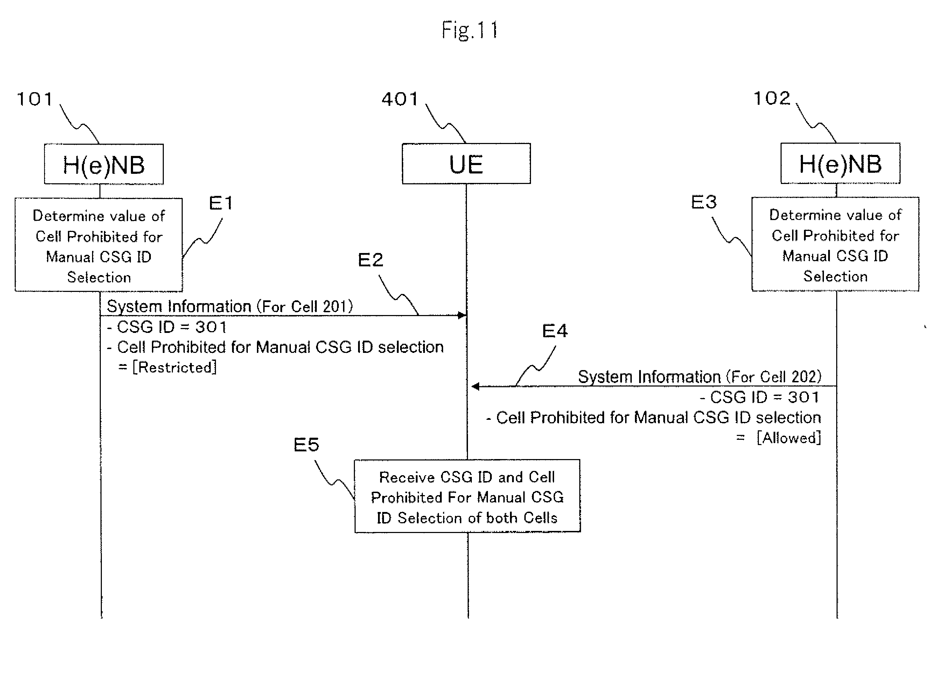

First, the entire operation of the wireless communication system of the present exemplary embodiment will be described with reference to the sequence diagram shown in Figure 11.

Referring to Figure 11, in step E1, H(e)NB 101 determines the value of the parameter: Cell Prohibited for Manual CSG ID Selection to be [restricted], and then, in step E2, informs femtocell 201 of System Information for which CSG ID 301 and the parameter: Cell Prohibited for Manual CSG ID Selection have been set.

Meanwhile, in step E3, H(e)NB 102 determines the value of the parameter: Cell Prohibited for Manual CSG ID Selection to be [allowed], and then, in step E4, informs femtocell 202 of System Information for which CSG ID 301 and the parameter: Cell Prohibited for Manual CSG ID Selection have been set.

In step E5, UE 401 receives from femtocell 201, CSG ID 301 and the parameter: Cell Prohibited for Manual CSG ID Selection, and receives from femtocell 202, CSG ID 301 and the parameter: Cell Prohibited for Manual CSG ID Selection.

Namely, in Figure 11, the parameter: Cell Prohibited for Manual CSG ID Selection of System Information of femtocell 201 assigned CSG ID 301 is set to [restricted], and the parameter: Cell Prohibited for Manual CSG ID Selection of System Information of another femtocell 202 assigned the same CSG ID 301 is set to [allowed].

In the first exemplary embodiment, UE 401 removes from candidates for manual selection, the CSG ID for which the parameter: Cell Prohibited for Manual CSG ID Selection is [restricted].

On the contrary, in the present exemplary embodiment, since both femtocells 201 and 202 set the same CSG ID 301 for System Information, there is a possibility, as shown in Figure 11, that even if the parameter: Cell Prohibited for Manual CSG ID Selection of one femtocell 201 is set to [restricted], the parameter: Cell Prohibited for Manual CSG ID Selection of the other femtocell 202 is set to [allowed].

In this case, in UE 401 that is present in the range of two femtocells 201 and 202, CSG ID 301 should not be removed from candidates for manual selection, and CSG ID 301 should be kept as a candidates for manual selection so that femtocell 202 becomes selectable.

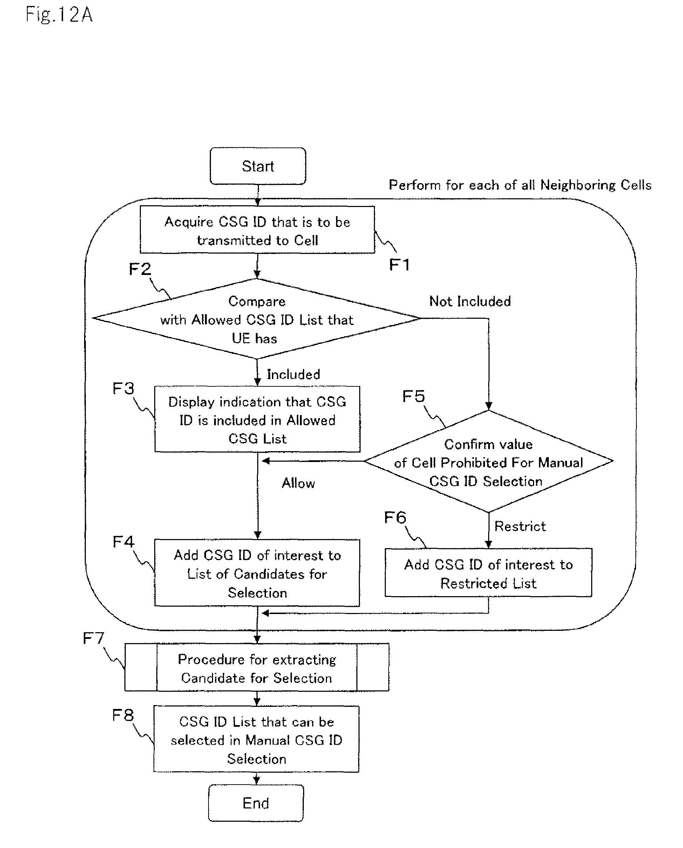

Thus, in the present exemplary embodiment, the operation of UE 401 is further devised. The operation of UE 401 will be described with reference to the flowchart shown in Figure 12A.

Referring to Figure 12A, first, in step F1, reception processing unit 4003 receives System Information of the neighboring cell to acquire the CSG ID of the neighboring cell.

Next, in step F2, cell selection processing unit 4004 compares the CSG ID of the neighboring cell with CSG IDs included in Allowed CSG List storage memory 4005.

If the CSG ID of the neighboring cell is included in the Allowed CSG List, in step F3, cell selection processing unit 4004 displays on display 4007 an indication that the CSG ID of the neighboring cell is included in the Allowed CSG List, and in step F4, adds the CSG ID of the neighboring cell to the list of candidates for selection.

Meanwhile, if the CSG ID of the neighboring cell is not included in the Allowed CSG List, in step F5, cell selection processing unit 4004 recognizes the value of the parameter: Cell Prohibited for Manual CSG ID Selection that is set for System Information that has been informed to the neighboring cell. If [allowed] is set or no value is set, in step F4, cell selection processing unit 4004 adds the CSG ID of the neighboring cell to the list of candidates for selection, on the other hand, if [restricted] is set, in step F6, cell selection processing unit 4004 adds the CSG ID of the neighboring cell to the restricted list.

The processing described above is performed for each of all neighboring cells.

After the processing is completed for all the neighboring cells, in step F7, cell selection processing unit 4004 extracts candidates for manual CSG ID Selection from the list of candidates for selection and the restricted list, and then, in step F8, displays on display 4007, the list of candidates for manual CSG ID Selection. Note that the CSG ID that has been removed from candidates for manual selection may not be displayed, or may be displayed as a non-selectable CSG ID.

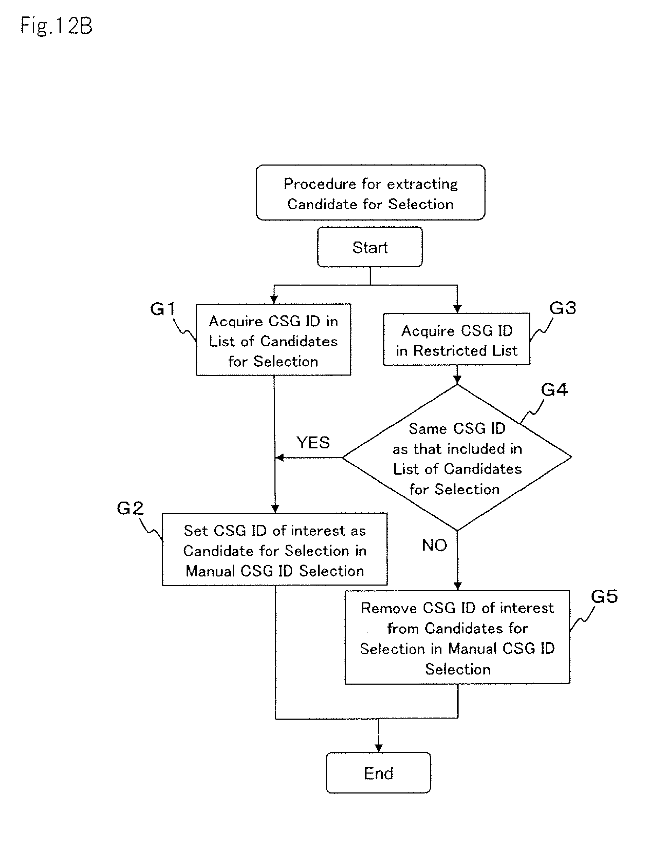

Here, the operation of UE 401 for extracting candidates for manual selection will be described with reference to the flowchart shown in Figure 12B.

Referring to Figure 12B, in step G1, cell selection processing unit 4004 acquires a CSG ID from the list of candidates for selection, and in step G2, sets the CSG ID as a candidate for manual selection.

In addition, in step G3, cell selection processing unit 4004 acquires a CSG ID from the restricted list, and in step G4, compares the CSG ID with CSG IDs that has been included in the list of candidates for selection.

If the CSG ID acquired from the restricted list is included in the list of candidates for selection, in step G2, cell selection processing unit 4004 sets the CSG ID as a candidate for manual selection.

Meanwhile, the CSG ID acquired from the restricted list is not included in the list of candidates for selection, in step G5, cell selection processing unit 4004 removes the CSG ID from candidates for manual selection.

In addition, when one CSG ID is selected from candidates for manual CSG ID Selection extracted through the above procedure, the UE selects from among a plurality of cells assigned the CSG ID of interest, the cell for which the parameter: Cell Prohibited for Manual CSG ID Selection is set to [allowed].

As described above, in the present exemplary embodiment, in a network environment in which the same CSG ID is assigned to a plurality of femtocells, when the parameter: Cell Prohibited for Manual CSG ID Selection of either of the femtocells is set to [allowed], even though the parameter: Cell Prohibited for Manual CSG ID Selection of the other femtocell is set to [restricted], UE 401 keeps the CSG ID as a candidate for manual selection. When a suitable cell is selected from among the CSG IDs selected through the manual selection procedure, the cell for which the parameter: Cell Prohibited for Manual CSG ID Selection is set to [allowed] is to be selected.

Therefore, an effect can be obtained in which candidates for manual CSG ID Selection can be increased, and the UE can select the cell for which the CSG ID is manually selectable.

### (Fourth Exemplary Embodiment)

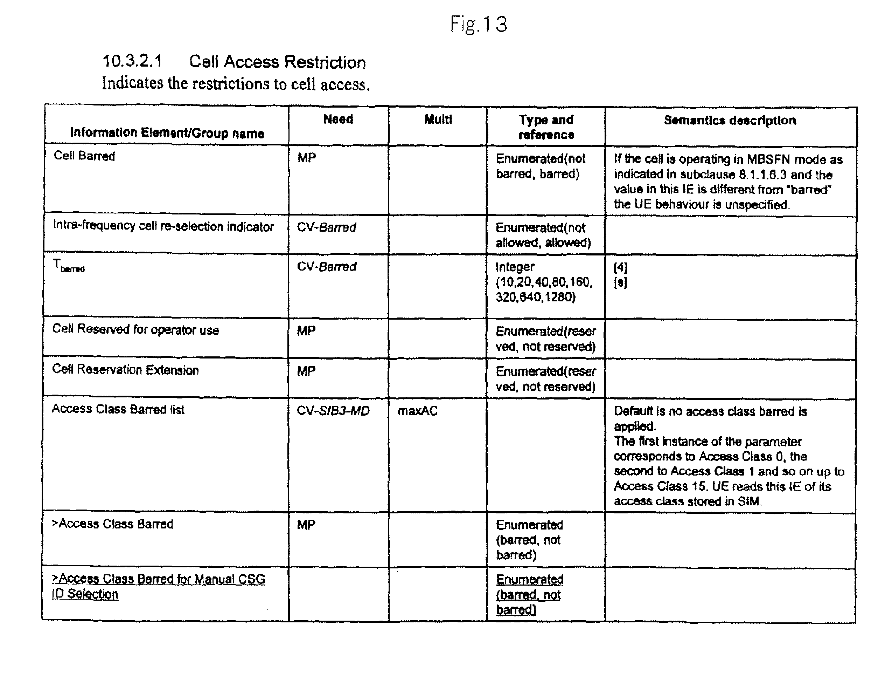

In the present exemplary embodiment, for each access class assigned to the UE in advance, H(e)NBs 101 and 102 set a parameter indicating whether the CSG ID included in System Information is manually selectable by the UE. In this specification, this parameter is set for System Information as Access Class Barred for Manual CSG ID Selection as shown in Figure 13.

In this case, UE 401 recognizes the value of the parameter of the access class assigned to itself in advance, and based on the value, determines whether the CSG ID is set as a candidate for manual selection.

As described above, in the present exemplary embodiment, not all UE, but some UEs belonging to a specific access class can be prohibited from manually selecting the CSG ID included in System Information that is informed by the femtocell.

Therefore, an effect can be obtained inwhich a plurality of UEs make a connection request by manual selection, thus the load control processing of H(e)NBs 101 and 102 can be performed in stages.

### (Fifth Exemplary Embodiment)

In the present exemplary embodiment, the present invention is applied to the wireless communication system of an IMS (IP Multimedia Subsystem)-Femto Architecture scheme.

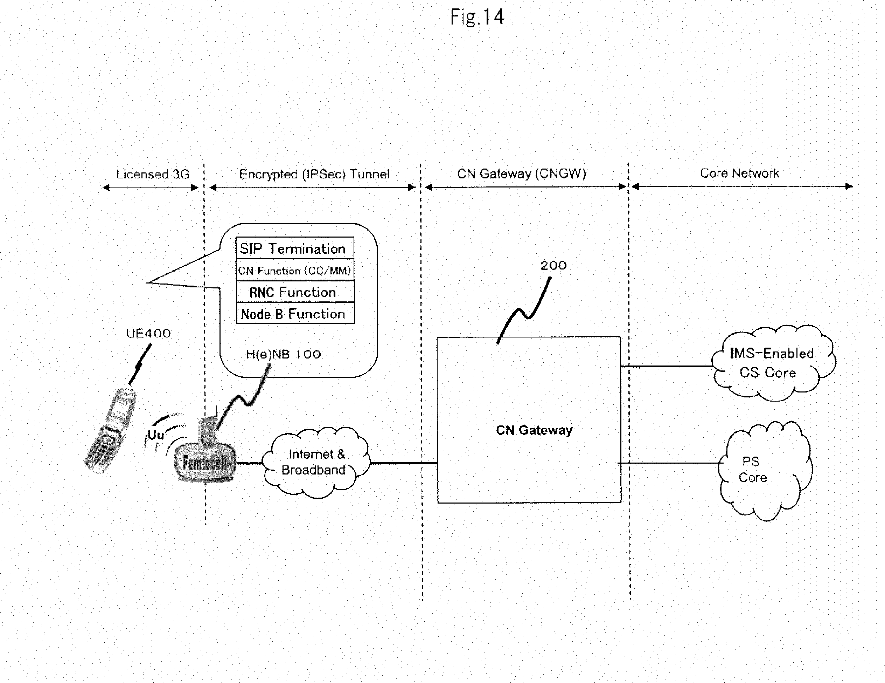

Figure 14 shows a configuration of the wireless communication system of the present exemplary embodiment.

Referring to Figure 14, the wireless communication system of the present exemplary embodiment includes H(e)NB 100, CNGW (Core Network Gateway) 200 and UE 400.

Note that in the present exemplary embodiment, compared to the second exemplary embodiment of Figure 3, only the architecture on the network side is different, and messages exchanged between UE 400 and the network are the same as those exchanged between UE 401 and H(e)NBs 101 and 102 in the second exemplary embodiment.

### (Sixth Exemplary Embodiment)

The above exemplary embodiment is to prevent UE from selecting the femtocell of the CSG to which the UE does not subscribe by manual selection from a user who does not subscribe to the CSG.

However, the present exemplary embodiment is to introduce, in operation of H(e)NB that operates in a Hybrid Access Mode, that is, in operation of the H(e)NB that allows the UE of the user subscribing to the CSG and the UE of the user not subscribing to the CSG to connect to the femtocell, the similar parameter (Cell Prohibited for non CSG UEs) to that of the second exemplary embodiment and the similar parameter (Access Class Barred for non CSG UEs) to that of the fourth exemplary embodiment.

When the H(e)NB transmits the parameter to the femtocell or the UE, all or some of the UEs used by users not subscribing to the CSG can be prevented from accessing the femtocell for which the value of the parameter is set to [restricted].

### (Seventh Exemplary Embodiment)

In the above exemplary embodiment, the parameter is set for System Information that is informed to the femtocell from the H(e)NB.

On the contrary, in the present exemplary embodiment, the above parameters are set for another message that is to be transmitted from the H(e)NB to the UE, such as an RRC Connection Setup message, a Cell Update Confirm message, a UTRAN Mobility Information message and the like.

In this case, the UE can acquire the parameters along with the message.

### (Eighth Exemplary Embodiment)

In the above exemplary embodiment, a cell selected by the UE by the manual selection from a user is the femtocell.

But, in the present exemplary embodiment, a cell selected by the UE by manual selection from the user is the macro cell.

In this case, similar to the above exemplary embodiment, the parameter may be set for System Information that is to be broadcast to the macro cell, for example.

Note that the first to eighth exemplary embodiments have been described by taking the wireless communication system such as femto and IMS as an example. However, the present invention is not limited to these systems, and may also be applied to other wireless communication systems including a wireless communication terminal and a base station apparatus.

In addition, the method performed at UE 401 and H(e)NBs 101 and 102 according to the present invention may be applied to a program executed by a computer. In addition, the program may be stored in a storage medium, and provided outside through a network.

The present invention has been described concretely based on preferred exemplary embodiments; however, needless to say, the present invention is not limited thereto, and may be changed in various manners without departing from the scope of the present invention.

The application claims the priority of Japanese Patent Application No. 2009-105630, filed on April 23rd, 2009, the entire of which is incorporated herein by reference.

## Claims

1. A wireless communication system comprising a wireless communication terminal and a base station apparatus, wherein
said base station apparatus
transmits to said wireless communication terminal, cell information relating to a cell of said base station apparatus, and selectability information indicating whether the cell information is manually selectable, and
said wireless communication terminal
receives from said base station apparatus the cell information and the selectability information of said base station apparatus.

2. The wireless communication system according to claim 1, wherein
said base station apparatus sets for System Information the cell information and the selectability information of said base station apparatus, and informs a cell of said base station apparatus of the System Information.

3. The wireless communication system according to claim 1, wherein
said base station apparatus sets for a predetermined message the cell information and the selectability information of said base station apparatus, and transmits the predetermined message to said wireless communication terminal.

4. The wireless communication system according to any one of claims 1 to 3, wherein
said base station apparatus determines whether the cell information of said base station apparatus is manually selectable depending on a communication status of said base station apparatus.

5. The wireless communication system according to any one of claims 1 to 3, wherein
said base station apparatus determines whether the cell information of said base station apparatus is manually selectable depending on an indication entered into said base station apparatus.

6. The wireless communication system according to any one of claims 1 to 3, wherein
said base station apparatus determines whether the cell information of said base station apparatus is manually selectable depending on a current time period.

7. The wireless communication system according to any one of claims 1 to 6, wherein said wireless communication terminal
holds in advance, a permitted list that is a list of cell information of cells to which the terminal itself can connect, and
based on the permitted list and the selectability information, determines whether the cell information of said base station apparatus is set as a candidate for manual selection.

8. The wireless communication system according to claim 7, wherein
from among cell information of neighboring cells, said wireless communication terminal removes from candidates for manual selection, cell information that is not included in the permitted list and for which the selectability information indicates manually non-selectable.

9. The wireless communication system according to claim 7, wherein
from among cell information of neighboring cells, said wireless communication terminal registers in a restricted list, cell information that is not included in the permitted list and for which the selectability information indicates manually non-selectable, and registers in a list of candidates for selection, cell information of other neighboring cells, and
from among cell information of neighboring cells included in the restricted list, removes from candidates for manual selection, cell information that is not included in the list of candidates for selection.

10. The wireless communication system according to claim 9, wherein
when selecting a cell having manually selected cell information, said wireless communication terminal
removes a cell having cell information for which the selectability information indicates manually non-selectable, and selects a cell having cell information for which the selectability information indicates manually selectable or a cell for which no selectability information is set.

11. The wireless communication system according to any one of claims 8 to 10, wherein
when a candidate for manual selection of the cell information is displayed, said wireless communication terminal does not display cell information removed from the candidates for manual selection or displays the cell information as non-selectable.

12. The wireless communication system according to any one of claims 7 to 11, wherein
said base station apparatus determines whether the cell information of said base station apparatus is manually selectable for each access class of said wireless communication terminal, and
transmits to said wireless communication terminal, the selectability information for each access class, and
said wireless communication terminal determines whether the cell information of said base station apparatus is set as a candidate for manual selection based on the selectability information for the access class assigned to the terminal itself in advance.

13. A base station apparatus that performs wireless communication with a wireless communication terminal, comprising
a transmitter that transmits to said wireless communication terminal, cell information relating to a cell of said base station apparatus, and selectability information indicating whether the cell information is manually selectable.

14. The base station apparatus according to claim 13, further comprising
a controller that sets for System Information, the cell information and the selectability information of said base station apparatus, wherein
said transmitter informs a cell of said base station apparatus of the System Information.

15. The base station apparatus according to claim 13, further comprising
a controller that sets for a predetermined message the cell information and the selectability information of said base station apparatus, wherein
said transmitter transmits the predetermined message to said wireless communication terminal.

16. The base station apparatus according to claim 14 or 15, wherein said controller determines whether the cell information of said base station apparatus is manually selectable depending on a communication status of said base station apparatus.

17. The base station apparatus according to claim 14 or 15, wherein said controller determines whether the cell information of said base station apparatus is manually selectable depending on an indication entered into said base station apparatus.

18. The base station apparatus according to claim 14 or 15, wherein said controller determines whether the cell information of said base station apparatus is manually selectable depending on a current time period.

19. The base station apparatus according to any one of claims 14 to 18, wherein
said controller determines whether the cell information of said base station apparatus is manually selectable for each access class of said wireless communication terminal, and
said transmitter transmits to said wireless communication terminal, the selectability information for each access class.

20. A wireless communication terminal that performs wireless communication with a base station apparatus, comprising
a receiver that receives from said base station apparatus, cell information relating to a cell of said base station apparatus, and selectability information indicating whether the cell information is manually selectable.

21. The wireless communication terminal according to claim 20, further comprising a controller that holds in advance, a permitted list that is a list of cell information of cells to which the terminal itself can connect, and based on the permitted list and the selectability information, determines whether the cell information of said base station apparatus is set as a candidate for manual selection.

22. The wireless communication terminal according to claim 21, wherein, from among cell information of neighboring cells, said controller removes from candidates for manual selection, cell information that is not included in the permitted list and for which the selectability information indicates manually non-selectable.

23. The wireless communication terminal according to claim 21, wherein
from among cell information of neighboring cells, said controller registers in a restricted list, cell information that is not included in the permitted list and for which the selectability information indicates manually non-selectable, and registers in a list of candidates for selection, cell information of other neighboring cells, and
from among cell information of neighboring cells included in the restricted list, removes from candidates for manual selection, cell information that is not included in the list of candidates for selection.

24. The wireless communication terminal according to claim 23, wherein
when selecting a cell having manually selected cell information, said controller
removes a cell having cell information for which the selectability information indicates manually non-selectable, and selects a cell having cell information for which the selectability information indicates manually selectable or a cell for which no selectability information is set.

25. The wireless communication terminal according to any one of claims 22 to 24, wherein
when a candidate for manual selection of the cell information is displayed, said controller does not display cell information that has been removed from the candidates for manual selection or displays the cell information as non-selectable.

26. The wireless communication terminal according to any one of claims 20 to 25, wherein
said receiver receives the selectability information for each access class, and
said controller determines whether the cell information of said base station apparatus is set as a candidate for manual selection based on the selectability information for the access class assigned to the terminal itself in advance.

27. A wireless communication method which is performed by a wireless communication system including a wireless communication terminal and a base station apparatus, comprising the steps of:
said base station apparatus transmitting to said wireless communication terminal, cell information relating to a cell of said base station apparatus, and selectability information indicating whether the cell information is manually selectable, and
said wireless communication terminal receiving from said base station apparatus the cell information and the selectability information of said base station apparatus.

28. A wireless communication method which is performed by a base station apparatus that performs wireless communication with a wireless communication terminal, comprising the step of:
transmitting to said wireless communication terminal, cell information relating to a cell of said base station apparatus, and selectability information indicating whether the cell information is manually selectable.

29. A wireless communication method that is performed by a wireless communication terminal that performs wireless communication with a base station apparatus, comprising the step of:
receiving from said base station apparatus, cell information relating to a cell of said base station apparatus, and selectability information indicating whether the cell information is manually selectable.
